# EUROPEAN PATENT APPLICATION

(11) **EP 1 602 470 A1**
(43) Date of publication of application: **07.12.2005**
(21) Application number: 04714908.3
(22) Date of filing: 26.02.2004
(51) Int. Cl.: B29C 70/44, B29C 70/48

(54) **METHOD OF RESIN TRANSFER MOLDING**

(30) Priority: 13.03.2003 JP 2003068252
(71) Applicant: Toho Tenax Co., Ltd., Tokyo 113-0033 (JP)
(72) Inventor: KANEKO, Toru c/o Toho Tenax Co., Ltd., Shizuoka 411-8720 (JP); UMEMOTO, Yoshitaka c/o Toho Tenax Co., Ltd., Shizuoka 411-8720 (JP); SASAKI, Kiyoto c/o Toho Tenax Co., Ltd., Shizuoka 411-8720 (JP)
(74) Representative: Ziebig, Marlene
(86) International application number: PCT/JP2004/002260
(87) International publication number: WO 2004/080697

(57) **Abstract**

The present invention discloses a method of resin transfer molding which comprises superposing a bagging film on a layer of reinforcing fibers laid on a mold, airtightly bonding the periphery of the bagging film to the mold, evacuating the space between the bagging film and the mold, injecting a resin into the space between the bagging film and the mold to thereby impregnate the resin into the reinforcing fibers, and curing the resin, **characterized in that** resin injection passages and resin discharge passages are alternately formed outside the reinforcing fiber layer along a surface of the reinforcing fiber layer and the resin is injected into the resin injection passages to allow the resin injected to move to the resin discharge passages via the reinforcing fiber layer and thereby impregnate the resin into the reinforcing fiber layer.

## Description

### Technical Field

The present invention relates to a method of resin transfer molding which comprises forming resin injection passages and resin discharge passages alternately, allowing the resin injected to the resin injection passages, to move to the direction of the resin discharge passages, thereby diffusing the resin into reinforcing fibers efficiently to produce a molded article.

### Background Art

Resin transfer molding is a kind of transfer molding using a thermosetting resin. In this resin transfer molding, a resin is injected into the cavity of a mold to cure the resin and thereby a molded article is obtained. As the mold into which a resin is injected, a mold of high rigidity is used ordinarily. When it is aimed to produce a large molded article, a mold wherein part of the mold has been replaced by a flexible bagging film, is used to produce such a molded article.

When a composite material molded article comprising a reinforcing fibers and a resin is produced by resin transfer molding, a molding material (e.g. reinforcing fibers) is laid along the inner surface of a mold, a resin is injected into the cavity of the mold to impregnate the resin into the reinforcing fibers, and the resin is cured.

For the injection molding of resin, there is ordinarily used low-pressure injection molding wherein no excessive pressure is applied to the mold used or the molded material produced but a vacuum is employed to make short the injection time of resin. With this molding, however, the injection time of resin can not be made sufficiently short when a large composite material molded article is produced.

In the low-pressure injection molding, particularly when a molding material is placed between a mold and a bagging film and molding is conducted in an airtight condition, the space between the mold and the bagging film is evacuated at the time of resin injection; as a result, the bagging film is pressed upon the molding material by the atmospheric pressure and the passages of the resin are blocked. Consequently, the swift diffusion of resin into reinforcing fibers is difficult.

In order to avoid this problem, a resin-diffusing medium is ordinarily used so as to make easy the diffusion of resin, when a composite material molded article is produced using a bagging film. The resin-diffusing medium is a mesh-like sheet. When the resin-diffusing medium is interposed between the molding material and the mold or the bagging film and a resin is injected into the mold, the resin passes through the resin-diffusing medium and resultantly the diffusion speed of resin in mold becomes larger. However, after the completion of molding, the resin-diffusing medium is ordinarily removed from the composite material molded article for weight reduction of the molded article and wasted. The resin-diffusing medium is necessary for efficient diffusion of resin but need be removed after the molding, which increases the production cost of molded article. Further, the resin-diffusing medium per se becomes a waste and poses a problem from an environmental protection standpoint.

Incidentally, as a technique for increasing the diffusibility of resin using no resin-diffusing medium, there is a resin transfer molding which uses a core material (which is a foamed material such as polyurethane or the like or a balsa material) having grooves formed thereon for resin diffusion (National Publication of International Patent Application No. 2000-501659 and National Publication of International Patent Application No. 2001-510748). In this method, a core material having a network of grooves for resin diffusion formed thereon is covered with reinforcing fibers; a plurality of such members are arranged in the form of a molded article to be produced; then, a resin is fed into the grooves of the core material. By feeding the resin into the grooves, the resin is impregnated into the reinforcing fibers covering the core material. Then, the impregnated resin is cured, whereby is obtained a composite material molded article containing a core material.

There is also known a technique wherein grooves for resin diffusion are formed in a mold such as metal mold, FRP mold or the like (JP2001-62932A). In the present invention which is described later, resin injection passages and resin discharge passages are alternately formed; a resin is injected from the resin injection passages, is allowed to move to the resin discharge passages through a layer of reinforcing fibers, and is impregnated into the reinforcing fibers; thereby, the shortened time of molding is achieved. This idea is not described in any of the above-mentioned literatures.

### Disclosure of the Invention

The present invention aims at providing a method of resin transfer molding which uses no resin-diffusing medium (which, after molding, is peeled from the molded article and wasted) and yet enables efficient resin diffusion.

In order to solve the above-mentioned problems of conventional techniques, the present invention provides the followings.
[1] A method of resin transfer molding which comprises superposing a bagging film on a layer of reinforcing fibers laid on a mold, airtightly bonding the periphery of the bagging film to the mold, evacuating the space between the bagging film and the mold, injecting a resin into the space between the bagging film and the mold to thereby impregnate the resin into the reinforcing fibers, and curing the resin, characterized in that resin injection passages and resin discharge passages are alternately formed outside the reinforcing fiber layer along a surface of the reinforcing fiber layer and the resin is injected into the resin injection passages to allow the resin injected to move to the resin discharge passages via the reinforcing fiber layer and thereby impregnate the resin into the reinforcing fiber layer.
[2] A method of resin transfer molding according to the above [1], wherein the resin is injected into the resin injection passages from a resin inlet formed at one end side of the mold, the inside of the resin discharge passages is evacuated from a resin outlet formed at the other end side of the mold, and the bagging film is pressurized from outside toward the reinforcing fiber layer.
[3] A method of resin transfer molding according to the above [1], wherein the distance between resin injection passage and resin discharge passage adjacent thereto is 20 to 200 mm.
[4] A method of resin transfer molding according to the above [1], wherein the resin injection passages and/or the resin discharge passages are constituted by grooves formed at the inner surface of the mold.
[5] A method of resin transfer molding according to the above [1], wherein the resin injection passages and the resin discharge passages are constituted by resin injection passages and resin discharge passages, which are formed alternately at one side of a sheet interposed between the mold and the reinforcing fiber layer.
[6] A method of resin transfer molding according to the above [1], wherein a passage-forming material is interposed between the reinforcing fiber layer and the bagging film to form resin injection passages and/or resin discharge passages.
[7] A method of resin transfer molding according to the above [6], wherein the passage-forming material is a spring-like tube.
[8] A method of resin transfer molding according to the above [1], wherein the resin injection passages and/or the resin discharge passages are constituted by grooves formed at the inner surface of the bagging film.
[9] A method of resin transfer molding according to the above [1], wherein the resin has a viscosity of 0.01 to 1 Pa·s when injected.
[10] A method of resin transfer molding which comprises superposing an upper mold on a layer of reinforcing fibers laid on a lower mold, clamping the lower mold and the upper mold, evacuating the inside of the cavity formed by the lower mold and the upper mold, injecting a resin into the cavity to impregnate the resin into the reinforcing fiber layer, and curing the resin, characterized in that resin injection passages and resin discharge passages are alternately formed outside the reinforcing fiber layer along a surface of the reinforcing fiber layer and the resin is injected into the resin injection passages to allow the resin injected to move to the resin discharge passages via the reinforcing fiber layer and thereby impregnate the resin into the reinforcing fiber layer.
[11] A method of resin transfer molding according to the above [10], wherein the distance between a resin injection passage and a resin discharge passage adjacent thereto is 20 to 200 mm.
[12] A method of resin transfer molding according to the above [10], wherein the resin injection passages and/or the resin discharge passages are constituted by grooves formed at the inner surface of the mold.
[13] A method of resin transfer molding according to the above [10], wherein the resin injection passages and the resin discharge passages are constituted by resin injection passages and resin discharge passages, which are formed alternately at one side of a sheet interposed between the mold and the reinforcing resin layer.
[14] A method of resin transfer molding according to the above [10], wherein the resin has a viscosity of 0.01 to 1 Pa·s when injected.

In the method of resin transfer molding according to the present invention, since resin injection passages and resin discharge passages are formed at the outer surface of a reinforcing fiber layer, diffusion of a resin into the reinforcing fiber layer is good. As a result, molding is completed in a short time even when a large molded article is produced. In the present method, molding is conducted using resin injection passages and resin discharge passages, which are reusable; therefore, no waste is generated and production cost can be lowered.

### Brief Description of the Drawings

Fig. 1 is a flow diagram showing an example of the method of resin transfer molding according to the present invention. (a) is a sectional view showing a state in which a reinforcing fiber layer has been interposed between a bagging film and a mold and sealing has been made between the bagging film and the mold; (b) is a sectional view showing a state in which the space between the bagging film and the mold has been made evacuated; and (c) is a sectional view showing a state in which a resin has been impregnated into the reinforcing fiber layer.
Fig. 2 is a plan view showing the state of Fig. 1(b).
Fig. 3 is a sectional view showing other example of the present method of resin transfer molding, wherein grooves have been formed at a surface of a mold.
Fig. 4 is a sectional view showing still other example of the present method of resin transfer molding, wherein passage-forming materials have been provided.
Fig. 5 is a sectional view showing still other example of the present method of resin transfer molding, wherein a grooves-formed sheet is provided.
Fig. 6 is a sectional view showing still other example of the present method of resin transfer molding, wherein grooves have been formed at a surface of a mold and passage-forming materials have been provided.
Fig. 7 is a sectional view showing still other example of the present method of resin transfer molding, wherein grooves have been formed in an upper mold of a divided mold.
Fig. 8 is a schematic perspective view showing a multi-axial fabric used in the present method of resin transfer molding.

1 is a reinforcing fiber layer; 2 is a bagging film; 3 is a mold; 5 is a sealant; 6 is a passages-forming sheet, and 7 is a bagging film. 8a, 8b, 8c, 8d, 28a, 28b, 28c, 40a, 40b, 40c, 57a, 57b and 57c are each a resin injection groove. 8e and 9d are each a connection groove.

9a, 9b, 9c, 29a, 29b, 41a, 41b, 49a, 49b, 59a and 59b are each a resin discharge groove. 10 is a resin inlet; 11 is a resin outlet; 13 is a resin-impregnated layer; and 15 is a resin layer.

38a, 38b, 38c, 39a, 39b, 48a, 48b and 48c are each a passage-forming material. 53 is a lower mold; 55 is an upper mold; 56 is an o-ring; and 100 is a multi-axial woven fabric.

### Best Mode for Carrying Out the Invention

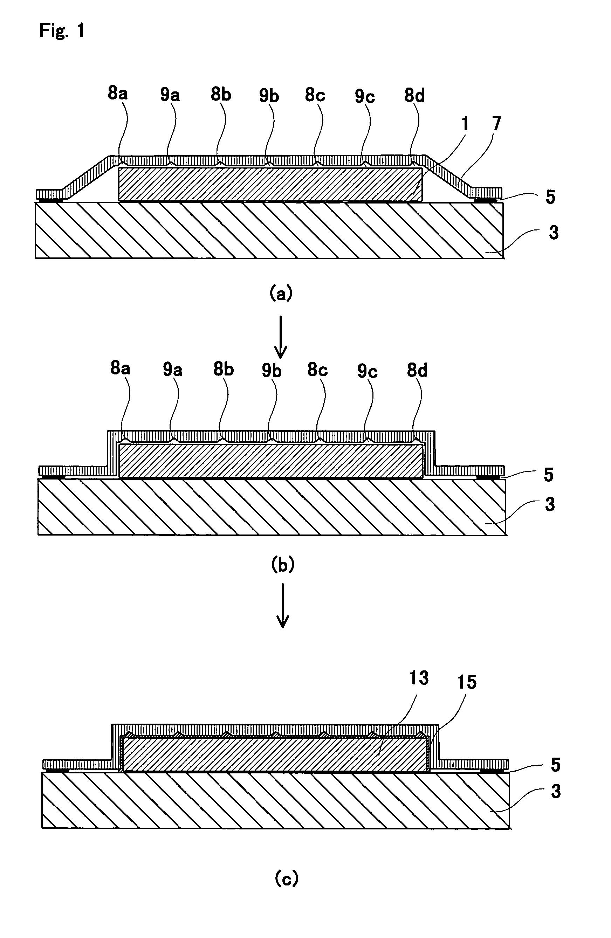

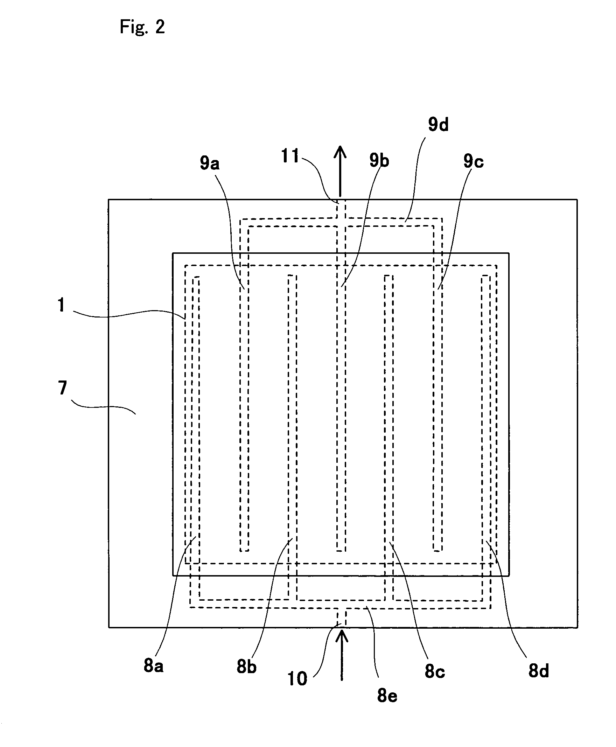

The method of resin transfer molding according to the present invention is described below referring to Fig. 1 and Fig. 2.

First, a reinforcing fiber layer 1 is laid on a plate-shaped mold 3 treated with a known releasing agent such as silicone oil or the like [Fig. 1(a)].

A peel cloth or the like (not shown) may be superposed as necessary on the reinforcing fiber layer 1 in order to enhance the releasability of molded article when the molded article is taken out.

A bagging film 7 in which grooves (described later) have been formed, is superposed on the reinforcing fiber layer 1.

The bagging film 7 has, at one side, resin injection grooves 8a, 8b, 8c and 8d and resin discharge grooves 9a, 9b and 9c, formed parallel to each other, alternately and at equal intervals. As shown in Fig. 2 described later, the resin injection grooves 8a, 8b, 8c and 8d are connected, at respective one ends, to a connection groove 8e and are communicated to a resin inlet 10. These resin injection grooves 8a, 8b, 8c and 8d, the connection groove 8e and the resin inlet 10 constitute a resin injection passage. Similarly, as shown in Fig. 2 described later, the resin discharge grooves 9a, 9b and 9c are connected, at respective one ends, to a connection groove 9d and are communicated to a resin outlet 11. These resin discharge grooves 9a, 9b and 9c, the connection groove 9d and the resin outlet 11 constitute a resin discharge passage.

The bagging film 7 is superposed on the reinforcing fiber layer 1 directing the side having the resin injection grooves and resin discharge grooves formed therein toward the reinforcing fiber layer 1. Then, using a sealant 5, the periphery of the bagging film 7 and the periphery of the mold 3 are bonded airtightly and sealed. The sealant and the method of sealing using the sealant are known each per se.

After the reinforcing fiber layer 1 has been confined airtightly between the bagging film 7 and the mold 3, the gas inside the closed space formed by the bagging film 7 and the mold 3 is evacuated and the closed space is maintained at a reduced pressure [Fig. 1(b)].

The plan view of Fig. 1(b) is shown in Fig. 2. After the gas inside the space between the bagging film 7 and the mold 3 has been evacuated, a resin is injected from a resin inlet 10 provided at one end side of the mold. The injected resin passes through a connection groove 8e formed in the bagging film 7 and arrives at the resin injection grooves 8a, 8b, 8c and 8d. Then, the resin passes from the resin injection grooves 8a, 8b, 8c and 8d through the inside of the reinforcing fiber layer 1 and is sent to the resin discharge grooves 9a, 9b and 9c and, during this time, is impregnated into the reinforcing fiber layer 1. At the other end side of the mold 3 is provided a resin outlet 11. The resin sent from the resin injection grooves 8a, 8b, 8c and 8d to the resin discharge grooves 9a, 9b and 9c (this resin is an excessive portion of the total resin injected) passes through the connection groove 9d, arrives at the resin outlet 11, and is discharged outside from the resin outlet 11.

In order to conduct resin injection in a short time and at a low injection pressure, it is preferred to conduct resin injection while the gas present between the mold 3 and the bagging film 7 is being evacuated. The evacuation is conducted via the resin outlet 11.

In order to conduct resin diffusion efficiently, it is possible not only to evacuate the gas present between the mold 3 and the bagging film 7 but also to pressurize the bagging film 7 from the outside toward the reinforcing fibers, during resin injection. In this case, the pressure applied is preferably 0.05 to 0.5 Mpa.

After the resin has been diffused into the whole portion of the reinforcing fiber layer 1, the resin impregnated into the reinforcing fiber layer 1 is cured [Fig. 1(c)]. When heating is necessary for resin curing, the resin-impregnated reinforcing fiber layer 1, the mold 3 and the bagging film 7 are heated together in an oven or the like. The molded article obtained comprises a resin-impregnated layer 13 formed by resin impregnation into reinforcing fiber layer 1 and subsequent resin curing, and a resin layer 15 formed by curing of the very resin covering the layer 13.

In curing of the impregnated resin, it is preferred that the gas present between the mold 3 and the bagging film 7 is evacuated continuously.

The thickness of the bagging film 7 is preferably 2 to 10 mm.

As to the resin injection grooves 8a, 8b, 8c and 8d, the resin discharge grooves 9a, 9b and 9c, the connection grooves 8e and 9d, etc. formed in the bagging film 7 as a resin injection passage and a resin discharge passage, there is no restriction as long as the resin flows sufficiently. However, it is preferred that the width is 0.5 to 5 mm, the depth is 1 to 5 mm and the sectional area of the section normal to the lengthwise direction is 0.5 to 25 mm². With a sectional area of less than 0.5 mm², the flow amount of resin tends to be small and the efficiency of production of molded article tends to be low. With a sectional area of more than 25 mm², the amount of the resin remaining unutilized in the grooves is large, which tends to invite poor economy.

There is no particular restriction as to the shape of the groove section normal to the lengthwise direction of groove; and the shape may be any desired shape such as U shape, V shape, semicircle, polygon or the like.

As the method for producing a grooves-formed bagging film, there can be mentioned, for example, a method of forming grooves in a bagging film, a method of casting an unvulcanized rubber into a mold having projected grooves on the surface and vulcanizing the rubber, and a method of press-vulcanizing an unvulcanized bagging film in a mold having projected grooves on the surface, to produce a bagging film.

The rubber constituting the bagging film 7 is preferred to have a hardness of 25 to 80 as measured according to JIS K 6301.

The material for the rubber constituting the bagging film 7 may be any known rubber material as long as it can form grooves therein. There can be mentioned, for example, a silicone rubber, a fluororubber, a urethane rubber, a natural rubber, a butadiene rubber, an acrylic rubber and a nitrile rubber.

As to the shape of the bagging film 7, there is no particular restriction, and the shape is appropriately selected so as to match the shape of desired molded article, etc.

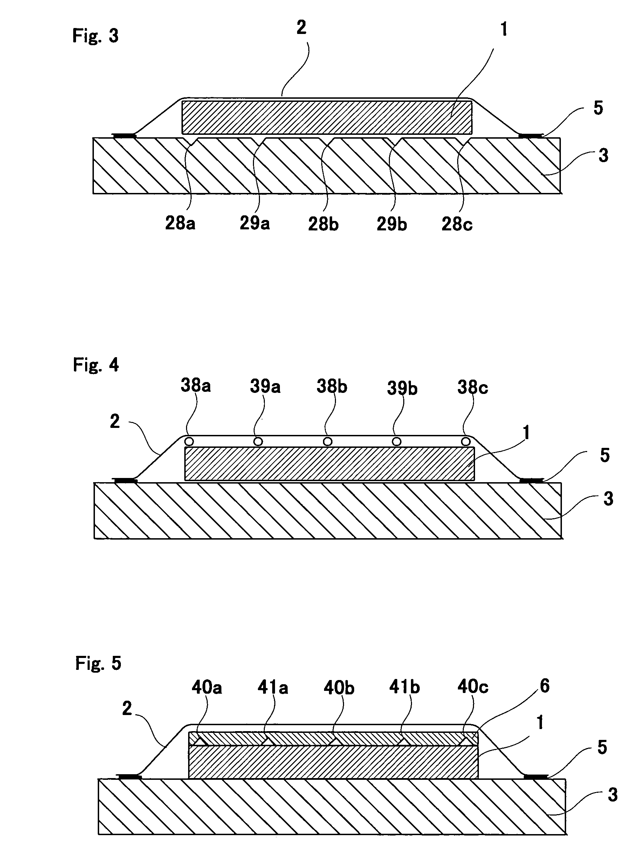

In Fig. 1 is shown a method of resin transfer molding which uses a bagging film in which resin injection passages and resin discharge passages have been formed. In the present invention, however, there can be employed various other means for formation of resin injection passages and resin discharge passages. Examples of formation of resin injection passages and resin discharge passages by other means are shown in Fig. 3 and Fig. 4. In these cases, molding can be made using an ordinary bagging film having neither resin injection passage nor resin discharge passage formed therein.

In Fig. 3, resin injection grooves 28a, 28b and 28c and resin discharge grooves 29a and 29b are formed at a surface of a mold 3 as resin injection passages and resin discharge passages. The size, shape, etc. of these grooves are the same as described above. Incidentally, 2 is a bagging film and 5 is a sealant.

In Fig. 4, passage-forming materials 38a, 38b and 38c are superimposed on a reinforcing fiber layer 1 laid on a mold 3 to constitute resin injection passages, and passage-forming materials 39a and 39b are also superimposed on the reinforcing fiber layer 1 to constitute resin discharge passages.

The passage-forming materials may have any shape or be made of any material as long as, when the inside of the space formed airtightly between a bagging film 2 and a mold 3 has been evacuated and the bagging film 2 has been deformed, the passage-forming materials can withstand the deformation for maintenance of resin passages and can feed a resin into reinforcing fibers.

As specific examples of the passage-forming material, there can be mentioned a perforated tube, a spring-like tube, a layered laminate having spaces, a columnar structure having a H-, L- or other-shaped sectional shape and a rod-like material having projections.

In the present invention, a spring-like tube is preferably used as the passage-forming material. The spring-like tube has an advantage in that the length can be controlled easily so as to match the size of the surface of the molded article to be obtained. The spring-like tube is preferred to have a diameter of 3 to 20 mm.

As the passage-forming material, there is also preferred a passages-forming sheet 6 shown in Fig. 5, having, at one side thereof, resin injection grooves 40a, 40b and 40c and resin discharge grooves 41a and 41b. As shown in Fig. 5, between a reinforcing fiber layer 1 laid on a mold 3 and a bagging film 2 is superposed a passages-forming sheet 6 with its side having grooves formed, directed toward the reinforcing fiber layer, whereby resin passages are formed. As the material for such a sheet, there are preferred the above-mentioned rubbers, a FRP or metal plate of 1 to 5 mm in thickness, etc.

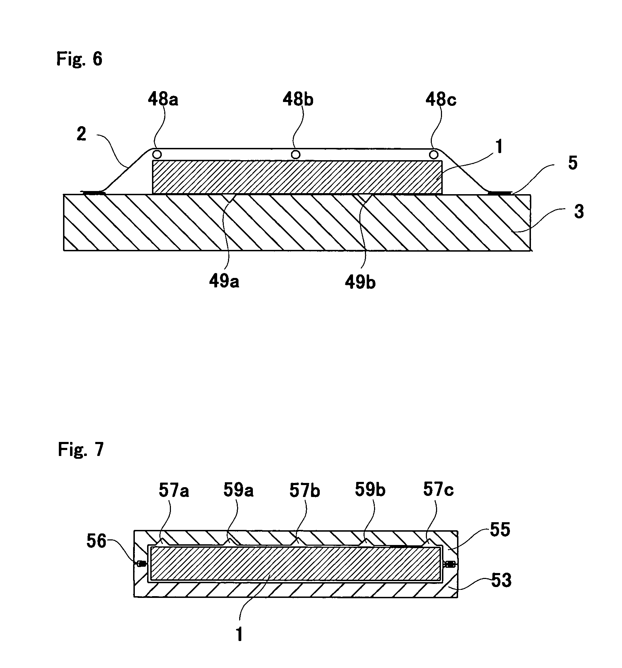

Further in the present invention, resin injection passages and resin discharge passages, having different structures may be combined. As an example, there is shown, in Fig. 6, a combination of passage-forming materials (resin injection passages) 48a, 48b and 48c and formed-in-mold grooves (resin discharge passages) 49a and 49b.

In Figs. 1 to 6 are shown cases of resin transfer molding each using a mold and a bagging film. In the resin transfer molding method of the present invention, however, it is possible to use a divided mold having rigidity, made of a metal, a FRP or the like. In Fig. 7 is shown a case of resin transfer molding using a divided mold having rigidity.

First, a reinforcing fiber layer 1 is laid in a lower mold 53. Then, on the lower mold 53 is superposed an upper mold 55 having resin injection grooves 57a, 57b and 57c and resin discharge grooves 59a and 59b, formed at the inner surface, followed by clamping. 56 is an O-ring interposed between the upper mold 55 and the lower mold 53 and can shield the mold from outside. Thereafter, molding is conducted in the same manner as in the above-mentioned resin transfer molding using a bagging film. Incidentally, unlike the above case, the resin injection grooves 57a, 57b and 57c and the resin discharge grooves 59a and 59b may be formed in the lower mold 53. Further, the resin injection passages and/or the resin discharge passages may be constituted using a passages-forming sheet shown in Fig. 5.

In the molding method of the present invention, the distance between resin injection passage and resin discharge passage adjacent thereto is preferably 20 to 200 mm. With a distance of less than 20 mm, the amount of the resin sent to the resin discharge passages and discharged uselessly is large. With a distance of more than 200 mm, the time of resin injection is long and the reinforcing fiber layer tends to have defective portions not impregnated with the resin.

Generally, the resin injection passages and the resin discharge passages are preferred to be formed linearly, at equal intervals, and in parallel. Besides, the resin injection passages and the resin discharge passages may be formed in any desired curves as long as the distance between resin injection passage and resin discharge passage adjacent thereto is constant. For example, when the amount of resin impregnated into reinforcing fiber needs to differ depending upon the portions of the molded article to be obtained, the amount of resin in the molded article to be obtained can be desirably controlled by changing the shapes of the resin injection passages and the resin discharge passages and the distances thereof.

As the reinforcing fibers used in the resin transfer molding method of the present invention, there can be used materials used as ordinary reinforcing fibers, such as carbon fibers, glass fibers, aramid fibers, born fibers, metal fibers and the like. Of these, preferred are carbon fibers, glass fibers and aramid fibers.

There is no particular restriction as to the form of the reinforcing fibers, and there can be used an unidirectional woven fabric obtained by unidirectional alignment of fibers, other woven fabric or knit, an unwoven fabric, etc.

When a woven fabric is used as the reinforcing fibers, the weave thereof may be any type. However, there is preferred a weave of plane symmetry or a weave wherein a plurality of reinforcing fiber woven fabrics are laminated so as to have a plane symmetry. By using reinforcing fiber woven fabric of plane symmetry, a reinforcing fiber woven fabric laminate having a plane symmetry by lamination, or the like, a molded article free from warpage can be obtained.

As the woven fabric of plane symmetry or the woven fabric which can be allowed to have a plane symmetry by lamination, there can be mentioned a unidirectional woven fabric or a multi-axial woven fabric.

Incidentally, the unidirectional woven fabric means a woven fabric obtained by knitting parallel bundles (strands) each of reinforcing fibers, with a nylon yarn, a polyester yarn, a glass fiber yarn or the like. The multi-axial woven fabric means a woven fabric obtained by forming unidirectionally alligned bundles each of reinforcing fibers, into a sheet shape, laminating a plurality of such sheets of reinforcing fibers with the angle of the fiber axis of each sheet changed, and stitching the laminated sheets with a nylon yarn, a polyester yarn, a glass fiber yarn or the like.

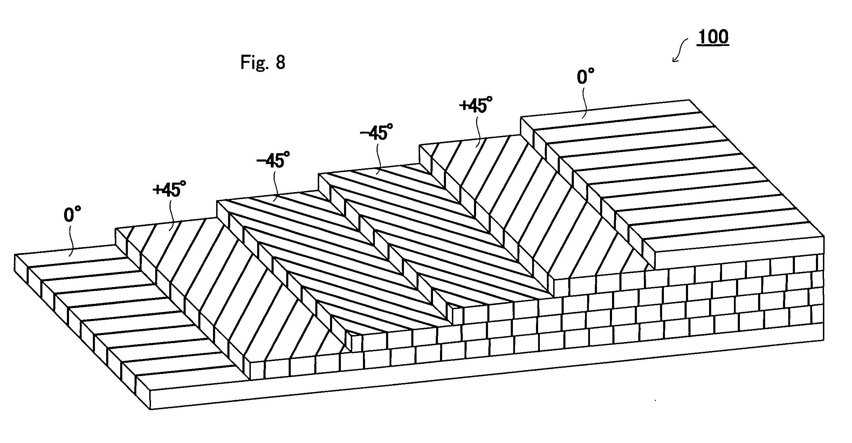

Fig. 8 is a schematic drawing showing an example of the multi-axial woven fabric of plane symmetry. In the multi-axial woven fabric 100 of this example, the directions of strands, i.e. the directions of fiber alignment are 0º, +45º, -45º, -45º, +45º, 0º in this order and are in plane symmetry. This multi-axial woven fabric 100 is obtained by stitching the 5-layer reinforcing fibers laminated as above, in the thickness direction of the laminate.

As preferred examples of the combination of the angles of the fiber axes of multi-axial woven fabric, there can be mentioned [0/-45/-45/0], [0/+45/-45/-45/+45/0] and [0/+45/90/-45/-45/90/+45/0].

As the combination of the multi-axial woven fabrics giving a plane symmetry when laminated, there can be mentioned, for example, [0/-45] and [-45/0], [0/+45/-45] and [-45/+45/0], and [0/+45/-45/90] and [90/-45/+45/0]. The angle at which the unidirectionally alligned reinforcing fibers are laminated, are not restricted only to 0º ± 45º and 90º and can be any other angle.

The thickness of the multi-axial woven fabric is selected appropriately depending upon the application of the molded article obtained but is preferred to be ordinarily 0.2 to 3 mm.

The weight per unit area of the reinforcing fiber woven fabric is preferably 200 to 4,000 g/m² and more preferably 400 to 2,000 g/m².

As the resin used in the resin transfer molding method of the present invention, there can be used a thermosetting resin ordinarily used in production of molded article. As specific examples, there can be mentioned an epoxy resin, an unsaturated polyester resin, a phenolic resin, a melamine resin, a polyurethane resin, a silicone resin, a maleimide resin, a vinyl ester resin, a cyanic acid ester resin, and a resin obtained by preliminary polymerization of maleimide resin and cyanic acid ester resin. A mixture of these resins can also be used. When the molded article obtained is used as a fiber-reinforced composite material, the resin is preferably an epoxy resin composition or a vinyl ester resin composition, both superior in heat resistance, elastic modulus and chemical resistance. These thermosetting resins may contain a known curing agent, a known curing accelerator, etc.

In the molding method of the present invention, the viscosity of the thermosetting resin injected is preferably 0.01 to 1 Pa·s. Preferably, the viscosity of the resin when injected is preferred to be controlled in the above range by treating the to-be-injected resin by preheating or the like.

### Examples

The present invention is described more specifically below by way of Examples.

### Example 1

A sheet wax cut into a size of 2 mm (width), 2 mm (height) and 70 cm (length) was stuck onto an aluminum plate of 1 m x 1 m in parallel at intervals of 30 mm, to form a large number of belt-shaped bulging portions on the aluminum plate. One ends of these bulging portions were bonded with a sheet wax at every other end. Similarly, the other ends of the remaining bulging portions were bonded with another sheet wax. In this way, there was produced a mold for formation of a bagging film 7 shown in Fig. 2, having a resin inlet and a resin outlet and also having resin injection grooves and resin discharge grooves formed alternately.

Further, a frame for prevention of liquid leakage was fitted along the circumference of the aluminum plate. Then, a mixture of 6 kg of a main agent (a silicone rubber KE-1310 ST produced by Shin-Etsu Chemical Co., ltd.) and 0.6 kg of a curing agent (CAT-1300 produced by the same firm) was cast into the mold produced above using an aluminum plate. The system was allowed to stand at room temperature for 1 day and then heated at 80ºC for 6 hours to obtain a silicone rubber-made bagging film of 1 m x 1 m having resin injection grooves and resin discharge grooves formed at the surface.

Meanwhile, 10 carbon fiber woven fabrics [W-3101 (trade name) produced by Toho Tenax] each cut into a size of 80 cm x 80 cm were laminated on an aluminum plate of 1 m x 1 m subjected to a release treatment. Then, a sealant tape was stuck to the periphery of the aluminum plate. Further, the whole part of the carbon fiber woven fabric laminate was covered with the silicon rubber-made bagging film obtained above. A resin injection hose was connected to the resin inlet and the a resin discharge hose was connected to the resin outlet, and the silicon rubber-made bagging film and the aluminum plate were bonded airtightly with the sealant tape. Thereafter, the resin inlet of the resin injection hose was closed.

The resin discharge hose connected to the resin outlet was connected to a vacuum pump, and the inside of the sealed space formed between the aluminum plate and the silicon rubber-made bagging film was evacuated.

Then, the aluminum plate fitted with the carbon fiber woven fabric laminate, the bagging film and the hoses was mounted on a hot plate heated at 80ºC and the assembly was heated to 80ºC.

Then, the vacuum pump connected to the resin discharge hose was actuated to reduce the pressure inside the bagging film to a vacuum of -0.1 Mpa. In this state, the resin inlet of the silicone rubber-made bagging film was opened to inject a thermosetting resin mixed solution heated to 80ºC, into the mold and impregnate the mixed solution into the carbon fiber woven fabric laminate, followed by curing of the mixed solution.

The injected resin mixed solution (viscosity: 0.1 Pa·s) was impregnated into the whole portion of the carbon fiber woven fabric laminate in 3 minutes and injection was completed. The amount of the resin used was 1.3 liters. The resin mixed solution injected was a mixture of 100 parts by mass of RTM-120 (a product of HEXCEL) and 35 parts by mass of HY 2954 (a product of HEXCEL).

In the molded article obtained, the resin was impregnated uniformly into the carbon fiber woven fabric laminate.

### Comparative Example 1

A molded article was produced in the same manner as in Example 1 except that there was used a bagging film having neither resin injection groove nor resin discharge groove, formed therein. A long time was taken for resin injection and the resin used began to thicken in the middle of injection. As a result, the resin mixed solution was impregnated into the carbon fiber woven fabric laminate portion of up to 20 cm from the resin inlet and there was no further impregnation.

### Comparative Example 2

A molded article was produced in the same manner as in Example 1 except that there was used a bagging film having neither resin injection groove nor resin discharge groove, formed therein and further that there was mounted, on the upper surface of the reinforcing carbon fiber layer, a medium [Resin Flow 60 (trade name) produced by AIRTECH]. The time needed for injection of the resin mixed solution was 5 minutes. In the molded article obtained, the resin was impregnated uniformly into the carbon fiber woven fabric laminate.

### Example 2

Resin transfer molding was conducted in the same manner as in Example 1 except that there was used a conventional bagging film having neither resin injection groove nor resin discharge groove, formed therein and further that there was superposed, on the reinforcing fiber layer, a passages-forming sheet shown in Fig. 5, having resin injection grooves and resin discharge grooves, formed therein. The sizes of the resin injection grooves and resin discharge grooves formed in the passages-forming sheet were the same as in Example 1. The time needed for injection of the resin mixed solution was 3 minutes. In the molded article obtained, the resin was impregnated uniformly into the carbon fiber woven fabric laminate.

## Claims

1. A method of resin transfer molding which comprises superposing a bagging film on a layer of reinforcing fibers laid on a mold, airtightly bonding the periphery of the bagging film to the mold, evacuating the space between the bagging film and the mold, injecting a resin into the space between the bagging film and the mold to thereby impregnate the resin into the reinforcing fibers, and curing the resin, **characterized in that** resin injection passages and resin discharge passages are alternately formed outside the reinforcing fiber layer along a surface of the reinforcing fiber layer and the resin is injected into the resin injection passages to allow the resin injected to move to the resin discharge passages via the reinforcing fiber layer and thereby impregnate the resin into the reinforcing fiber layer.

2. A method of resin transfer molding according to Claim 1, wherein the resin is injected into the resin injection passages from a resin inlet formed at one end side of the mold, the inside of the resin discharge passages is evacuated from a resin outlet formed at the other end side of the mold, and the bagging film is pressurized from outside toward the reinforcing fiber layer.

3. A method of resin transfer molding according to Claim 1, wherein the distance between resin injection passage and resin discharge passage adjacent thereto is 20 to 200 mm.

4. A method of resin transfer molding according to Claim 1, wherein the resin injection passages and/or the resin discharge passages are constituted by grooves formed at the inner surface of the mold.

5. A method of resin transfer molding according to Claim 1, wherein the resin injection passages and the resin discharge passages are constituted by resin injection passages and resin discharge passages, which are formed alternately at one side of a sheet interposed between the mold and the reinforcing fiber layer.

6. A method of resin transfer molding according to Claim 1, wherein a passages-forming material is interposed between the reinforcing fiber layer and the bagging film to form resin injection passages and/or resin discharge passages.

7. A method of resin transfer molding according to Claim 6, wherein the passages-forming material is a spring-like tube.

8. A method of resin transfer molding according to Claim 1, wherein the resin injection passages and/or the resin discharge passages are constituted by grooves formed at the inner surface of the bagging film.

9. A method of resin transfer molding according to Claim 1, wherein the resin has a viscosity of 0.01 to 1 Pa·s when injected.

10. A method of resin transfer molding which comprises superposing an upper mold on a layer of reinforcing fibers laid on a lower mold, clamping the lower mold and the upper mold, evacuating the inside of the cavity formed by the lower mold and the upper mold, injecting a resin into the cavity to impregnate the resin into the reinforcing fiber layer, and curing the resin, **characterized in that** resin injection passages and resin discharge passages are alternately formed outside the reinforcing fiber layer along a surface of the reinforcing fiber layer and the resin is injected into the resin injection passages to allow the resin injected to move to the resin discharge passages via the reinforcing fiber layer and thereby impregnate the resin into the reinforcing fiber layer.

11. A method of resin transfer molding according to Claim 10, wherein the distance between resin injection passage and resin discharge passage adjacent thereto is 20 to 200 mm.

12. A method of resin transfer molding according to Claim 10, wherein the resin injection passages and/or the resin discharge passages are constituted by grooves formed at the inner surface of the mold.

13. A method of resin transfer molding according to Claim 10, wherein the resin injection passages and the resin discharge passages are constituted by resin injection passages and resin discharge passages, which are formed alternately at one side of a sheet interposed between the mold and the reinforcing resin layer.

14. A method of resin transfer molding according to Claim 10, wherein the resin has a viscosity of 0.01 to 1 Pa·s when injected.
